# EUROPEAN PATENT SPECIFICATION

(11) **EP 2 788 165 B1**
(45) Date of publication and mention of the grant of the patent: **29.08.2018**
(21) Application number: 12823200.6
(22) Date of filing: 07.12.2012
(51) Int. Cl.: B29C 45/17, B29C 45/33, B29C 45/00, B29L 31/22, B29L 23/18

(54) **A MANUFACTURING METHOD FOR BELLOW PIPES**
HERSTELLUNGSVERFAHREN FÜR BALGROHRE
PROCÉDÉ DE FABRICATION DE TUYAUX À SOUFFLET

(30) Priority: 07.12.2011 TR 201112134; 04.12.2012 TR 201214076
(43) Date of publication of application: 15.10.2014
(73) Proprietor: Teklas Kaucuk Sanayi Ve Ticaret A.S., 41400 Kocaeli (TR)
(72) Inventor: BOZKURTLU, Murat, 41400 Kocaeli (TR)
(74) Representative: Atalay, Baris
(86) International application number: PCT/IB2012/002638
(87) International publication number: WO 2013/084055

(56) References cited:
- DE-A1-102005 033 172
- JP-A- H06 182 860
- JP-A- 2002 098 270
- JP-A- 2006 088 379
- JP-A- 2007 001 050

## Description

The present invention relates to a method that enables a thermoplastic pipe in a partial or complete bellows-form, preferably having connecting elements such as clip, bracket, etc. thereon to be produced in a single process.

### Prior Art

Gas/water/projectile injection techniques are production methods that are used to produce a hollow article by injecting a molten plastic into a mold cavity and, thanks to the faster cooling and solidification of the outer walls of the melt, forcing the not-yet solidified material in the core out of the mold by means of pressurized gas (GIT), liquid (LIT), especially water (WIT) and projectile (PIT).

Plastic molding technique by means of gas injection technology is known for a long time. In the Patent No. US 4923667 published in 1990, it is disclosed that hollow articles can be produced by supplying gas into the mold cavity filled with molten plastic.

In the Patent No. DE 19903682, it is disclosed that a liquid, especially water can be used instead of gas in order to push the molten core out of the mold cavity. A faster process is achieved as the water absorbs more heat compared to gas. In the Patent No. WO 2004113048, it is disclosed that water injection technique allows production of pipes with thinner walls in comparison to the gas injection technique. Moreover, the hesitation marks, which are surface defects causing quality problems and occuring due to the high viscosity difference between the melt material and the gas, can be eliminated by using water instead of gas.

A significant advantage of gas/water/projectile injection technology is that with this method, connecting elements like clips, brackets, etc. desired to be present on the pipe can be formed as a single piece together with the product during the injection process and thus no additional joining step is needed.
Pipes and hoses produced with gas/water/projectile injection technology are used especially in automotive industry in sections like engine cooling systems, radiators, fuel systems, etc. and produced from various thermoplastic materials, generally from fiberglass reinforced polyamide. As disclosed in the Patent Application No. US 2010294421, in such systems, pipes connect hard-to-reach points in crowded engine compartments and are exposed to a severe vibration. A bellows form that is at least regionally formed on the pipe provides a significant advantage for absorbing said vibration as well as maintaining the elasticity required for an easy installation. However, with the gas/water/projectile injection technologies, it is not possible to obtain a bellows form on a pipe of such type. Although production of a hose in bellows form with the water injection technology is disclosed in the patent application no. DE 102005033172, said hose is produced from a thermoplastic elastomer material and used as a sheath for protecting cables that connects the doors, tailgates and similar movable parts of motor vehicles to the vehicle body. Although it is not possible to obtain a precise inner bellows structure with the method disclosed in DE 102005033172, the product still gains a sufficient elasticity thanks to the thermoplastic elastomer material used. However, in the cooling, fuel and turbocharger systems of motor vehicles wherein the method of the present invention will be used, connecting elements that should be provided on the pipe cannot be produced from a thermoplastic elastomer material due to the heat resistance and mechanical strength requirements. Therefore, secondary processes will be needed for joining the connecting elements to a bellows pipe produced with the method disclosed in the above mentioned patent. In the patent no JPH06182860, fluid pressurized method is disclosed for producing hollow injection molding piece with partition but said partitions cannot have continuous ridges or troughs that extend over whole circumference of molded piece for providing sufficient elasticity.

In the patent application no. WO 0168397, a method is disclosed for producing a fuel filler pipe with a rigid and smooth portion in the middle region and a bellows portion close to an end. In this method, the plastic melt injected into the mold cavity is blown towards the walls of the mold by means of a pressurized gas. Also in JP 2007001050 and JP2002098270, blow molding methods are disclosed for producing joint boot in bellows shape and multilayer plastic tube with bellows respectively. Although a bellows pipe can be produced with such a blow molding method, connecting elements required on the pipe cannot be produced and secondary processes such as welding or overmolding are needed for the elements of this type. Such secondary joining processes cause extra cost and operation time and also increase leakage possibility at welding regions.

Combination of injection molding and blow molding is disclosed in the patent no JP2006088379. In the first step of the method, molten material is injected into a mold cavity. Mold cavity is formed by inserting inner cores between the outer mold halves. Result of the first step, injection molding part and hollow preform without bellows are obtained by injection molding. Following the injection molding, inner cores are retracted from the outer mold, then the preform is inflated by the pressurized fluid. Preform takes the bellows shape of the blow mold that replaces the sliding core .

### Short Description of the Invention

In the present invention, a method is disclosed which enables the production of a bellows pipe that can be used in crowded engine compartments, can be easily detached and attached, and that can absorb the vibrations generated by the engine, by using fluid/projectile injection technologies.

A method enabling the production of a bellows pipe with fluid/projectile injection technologies will reduce the process time by decreasing the number of production steps, will provide an easy and simple production process and decrease the production costs.

In the first stage of the method of the present invention, the mold cavity is filled with the molten material. In this stage, a smooth slider set is present at the region of the mold that will provide the bellows form. Following the injection, the molten material in the mold cavity starts cooling first on its outer surfaces. The relatively hotter and liquid material remaining in the core is displaced from the mold cavity by means of a pressurized fluid or a projectile injected into the mold cavity. As a result of the first stage of the method, a preform without bellows is obtained. In the following stage, the smooth slider set is moved away and a second slider set which is orthogonal to the former one and which has bellows-shaped inner walls is moved in the emptied space of the former one. Before this change, the pressure in the preform is equalized to the atmospheric pressure. Finally, by again supplying pressurized fluid into the mold cavity, the preform that is still hot is blown up to stick to the walls and thus the desired bellows form is obtained.

The present invention will be described in detail by means of the figures.
Figure 1 shows the bellows pipe produced with the method of the present invention.
Figure 2a is the isometric view of the mold used for the production of the pipe.
Figure 2b is the isometric view of the halves of the mold
Figure 2c is the simplified top view of the male mold portion.
Figure 3a is the cross-sectional view of the mold in Figure 2a with respect to A-A
Figure 3b is the cross-sectional view of the mold in Figure 2a with respect to B-B
Figure 4 is the view of the smooth preform obtained in the first stage of the method.
Figure 5a is the isometric and sideways view of the slider sets in the first stage of the method.
Figure 5b is the cross-sectional view of the mold in Figure 5a with respect to C-C line.
Figure 6a is the isometric view of the slider sets during the replacement process.
Figure 6b is the cross-sectional view of the slider sets during the replacement process.
Figure 7 is the cross-sectional view of the slider sets in Figure 5b before the second stage of the method.
Figure 8 is the front view of the slider sets after the second stage of the method.
Figure 9 is the cross-sectional view of the bellows portion of the pipe.
Figure 10a is the view of the stationary slider set used in the method when the segments are closed.
Figure 10b is the view of the stationary slider set used in the method when the segments are open.
Figure 11 shows the smooth pipe having portions with equal wall thicknesses and different cross-sections, obtained with the method of the present invention.
Figure 12 is the isometric view of the slider sets used in the production of the pipe having portions with different cross-sections in equal wall thicknesses.
Figure 13 shows a pipe produced with the method of the present invention.

The elements related to the present invention are numbered as follows in the above-described figures:
- **1**: Bellows pipe
- **1', 1"**: Smooth pipe with enlarged sections
- **2**: Preform without bellows
- **3**: Bellows portion
- **4**: Smooth tubular portion
- **4', 4"**: Large diameter smooth portion
- **5**: Connecting elements
- **6**: Space
- **7**: Injector
- **8**: Nozzle
- **9**: Valve
- **10**: Portion
- **20**: Mold
- **21**: Male mold
- **22**: Female mold
- **23**: Mold cavity
- **24**: Extra mold cavity
- **25**: Smooth slider set
- **25'**: Smooth slider set
- **26**: Corrugated slider set
- **27**: Stationary slider set
- **28**: Segment
- **31**: Trough
- **32**: Ridge
- **31'**: Trough
- **32'**: Ridge
- **t1**: Wall thickness of smooth portion
- **t2**: Wall thickness of bellows portion
- **d1**: Outer diameter of smooth portion
- **d2**: Outer diameter of bellows portion

### Detailed Description of the Invention

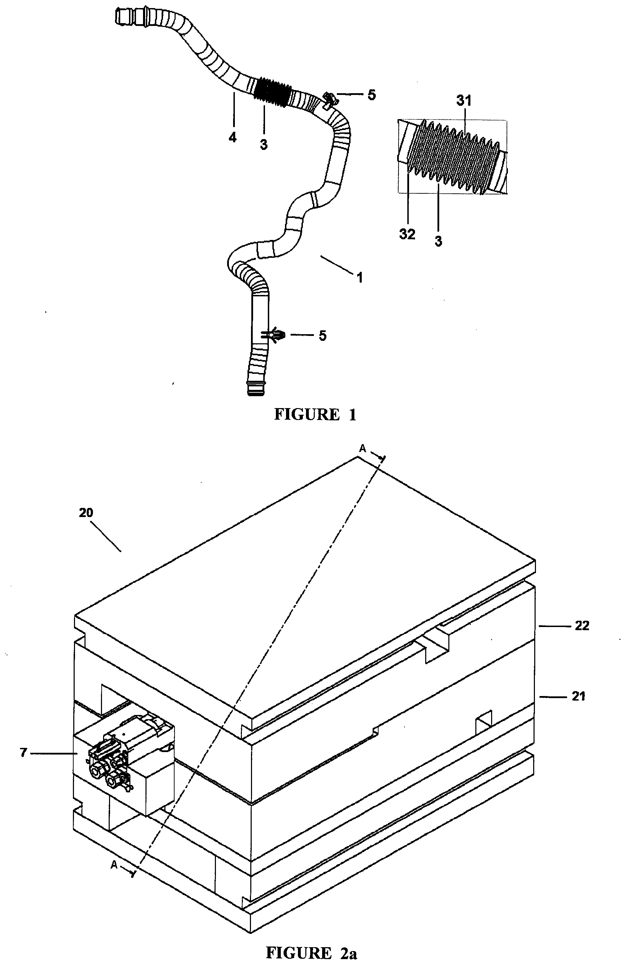

Figure 1 shows a pipe (1) produced with the method of the present invention. The pipe (1) is composed of a bellows portion (3) comprising ridges (32) and troughs (31), and a remaining smooth tubular portion (4). Besides the bellows and the smooth portions (3,4), various connecting elements (5) are provided on the pipe (1) to be used in the engine circuit wherein the pipe (1) will be placed. By means of the said method, said connecting elements (5) are produced without applying any additional process such as welding or overmolding.

The number of the troughs (31) and ridges (32) on the bellows portion (3) may change according to the application area of the product (1). The depths of the troughs and ridges (31, 32) may also be changed in accordance with the ambient conditions as well as the pipe material. The bellows portion (3) can be formed at any region of the pipe (1), or even the whole pipe (1) can be produced in bellows form.

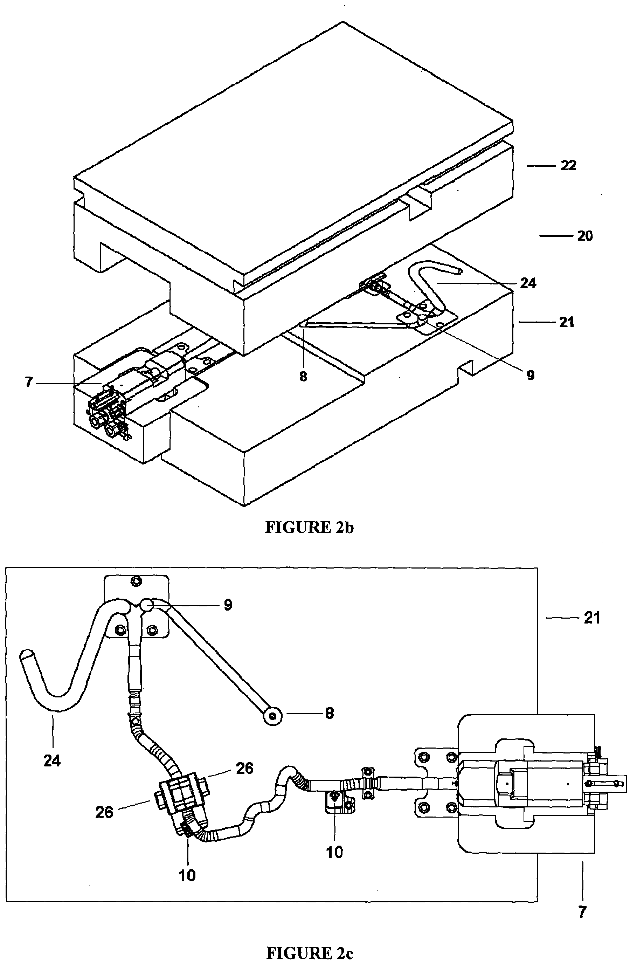

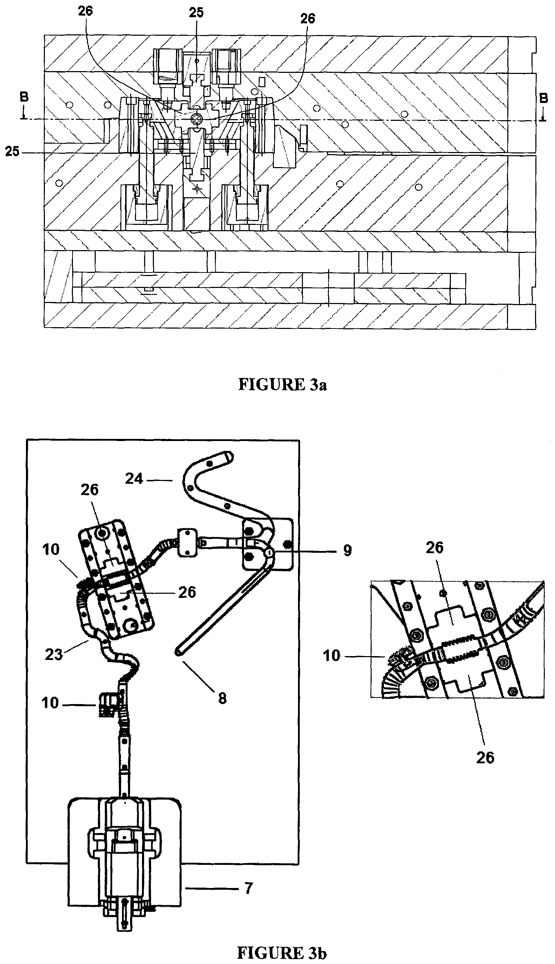

As shown in Figure 2a-2c, the mold (20) used in the production of the pipe (1) is composed of two halves, being a male half (21) and a female half (22). When the two halves (21,22) are assembled, a mold cavity (23) having the form that is desired to be applied to the pipe (1) is obtained. The mold cavity (23), seen in detail in Figure 3b, starts from the nozzle (8) through which the melt is injected, passes through the part where the sliders (26) are disposed to form the bellows portion and continues up to the injector (7) from which the pressurized fluid is injected. Moreover, the mold cavity (23) branches off to form an extra mold cavity (24) into which the displaced molten plastic will fill. Said extra mold cavity (24) is kept in isolated position during the injection of the melt by means of a valve (9). At the moment the pressurized fluid or the projectile is injected into the mold (20) to form the hollow, said valve (9) is opened, thus enabling the expelled material to fill into the extra mold cavity (24). At one end of the mold cavity (23) there is the nozzle (8) through which the molten plastic is supplied, and at the other end there is the injector (7) through which the pressurized fluid or the projectile is injected. Moreover, the mold cavity (23) comprises portions (10) that will form the required connecting elements (5) on the pipe (1).

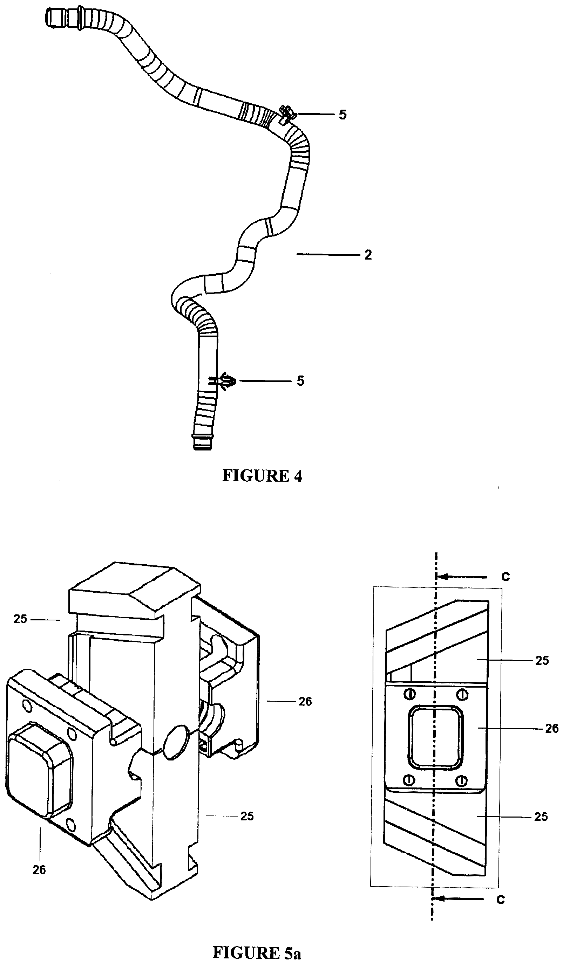

At some part of the mold cavity (23), the two slider sets (25, 26) oriented orthogonal to each other as in Figure 5a, are provided. In the first stage of the method, the slider set (25) with smooth inner walls is used. On the other hand, the corrugated slider set (26) used in the second stage of the method has the bellows shape which is intended to be given to the pipe (1) with the troughs (31') and the ridges (32') formed on its inner walls. Said two slider sets (25, 26) are positioned at the region in the mold (20) where the bellows portion (3) will be formed. The angle between slider sets (25, 26) and the mold cavity (23) can be altered.

In the first stage of the process, the melt injected through the nozzle (8) fills in the whole mold cavity (23) except the extra mold cavity (24) since the valve (9) is closed. After the mold cavity (23) is filled, the valve (9) connected to the extra mold cavity (24) is opened. As the outer surfaces of the molten plastic filling the mold cavity (23) starts cooling, a pressurized fluid, preferably water is injected through the injector (7). On one hand the pressurized fluid accelerates the cooling of the melt, on the other hand it pushes the hot and liquid material in the core out of the mold cavity (23). The displaced plastic material fills in the extra mold cavity (24). In this process, the molten core can also be expelled by injecting a projectile instead of pressurized fluid.

Figure 4 shows the hollow smooth preform (2) with the connecting elements (5) which is obtained in the first stage of the method as a result of the above-mentioned operations.

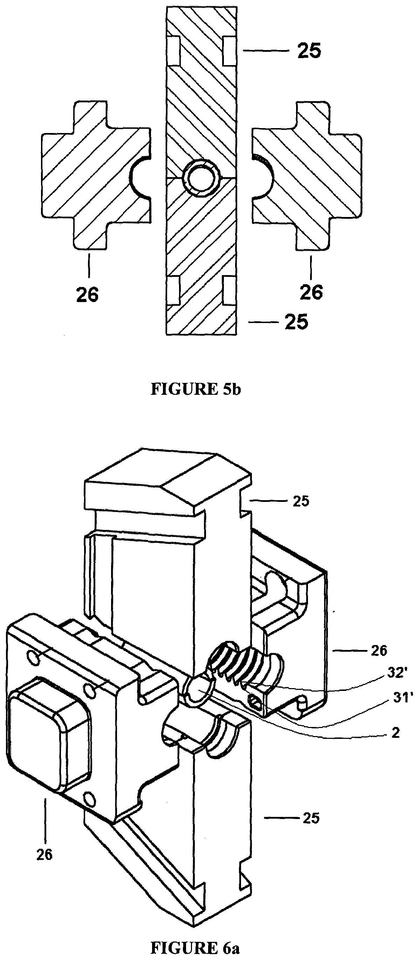

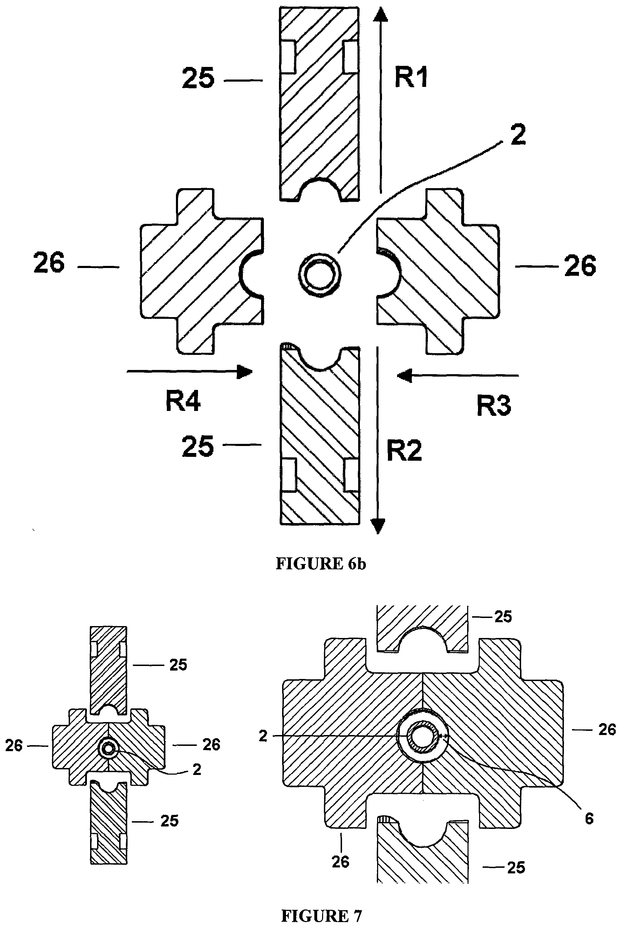

Figure 5 shows the position of the slider sets (25, 26) as the molten plastic is injected in the first stage of the method. In this stage, the smooth slider set (25) is closed and forming the part of the mold cavity (23). On the other hand, the corrugated slider set (26) is open and orthogonal to the smooth slider set (25). After the smooth preform (2) is formed, the smooth slider set (25) is detached by being moved in opposite directions (R1, R2) as shown in Figure 6b. The corrugated slider set (26) perpendicular to the smooth sliders (25) is moved in the direction of arrows (R3, R4) and placed onto the preform (2). As shown in Figure 7, a space (6) remains between the sliders (26) and the preform (2). The amount of this space (6) determines the wall thickness difference between the bellows portion (3) and the smooth tubular portion (4).

In order to prevent undesired deformations during the replacement of the sliders (25, 26), the pressure inside the preform (2) which is not entirely cold and stiff yet is equalized to the atmospheric pressure before any replacement of the sliders (25, 26).

After the corrugated slider set (26) is attached, the pressurized fluid is once again supplied into the preform (2). The plastic material which is still in half-molten slate is blown by the pressure to stick to the bellows shaped walls of the slider (26) so that it takes the intended bellows form (3).

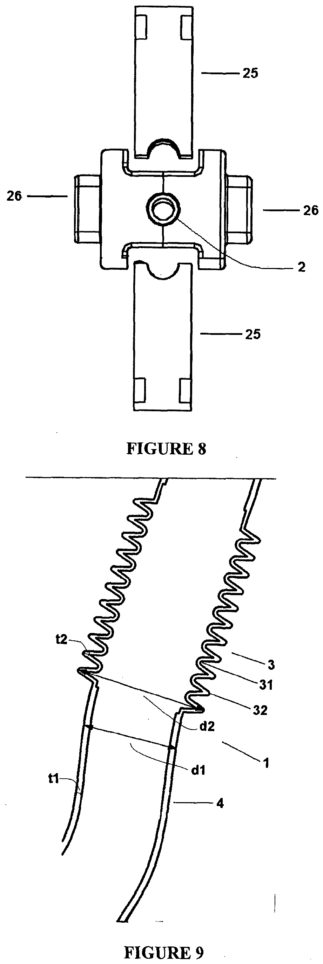

Figure 8 shows the preform (2) that is inflated by the pressurized fluid and takes the bellows shape of the corrugated sliders (26). The space (6) between the preform and the slider set (26) is now closed.

The bellows portion (3) is obtained by means of the troughs and ridges (31, 32) formed at both the inner and outer surfaces of the pipe (1) by means of the blowing method with pressurized fluid applied in the second stage of the method. The outer diameter (d2) of the bellows portion (3) is larger than the outer diameter (d1) of the smooth tubular portion (4). By leaving a space (6) between the corrugated slider set (26) and the preform (2), the bellows portion (3) is inflated, and while its outer diameter (d2) increases, its wall thickness (t2) decreases. Thus, the bellows portion (3) the walls of which are thinner with respect to the walls of the smooth tubular portion (4) gives the desired elasticity to the pipe (1). The said difference of wall thicknesses may change in accordance with the volume of the space (6) between the slider set (26) and the preform (2). Moreover, the slider sets (25, 26) can be heated or cooled in order to obtain a much better bellows form (3).

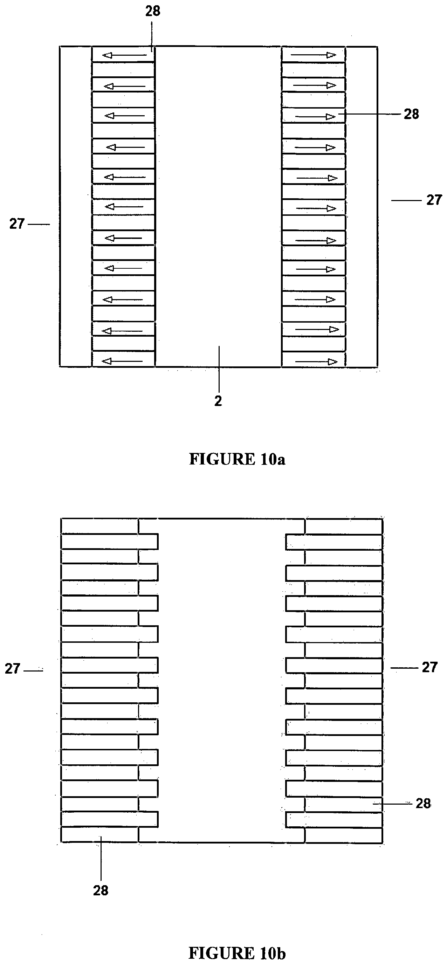

The replacement of the sliders (25, 26) between the first stage and the second stage of the method is not limited to the displacement and replacement of the first and second slider sets (25, 26). Figure 10a shows a stationary slider set (27) used in the first stage of the method. The movable segments (28) on the stationary slider set (27) move away from the preform (2) and retract in the second stage of the method as shown in Figure 10b. The pressurized fluid applied in the second stage of the method inflates the preform (2) towards the gaps formed after the retraction of the segments (28), thus providing the final form. The bellows structure can be also formed by the movable segments (28) moving forward in the second stage of the method.

The slider (25, 26) replacement operations performed in the said inflation method realized by using fluid/projectile technologies can be diversified beyond the examples given herein. For example, each of the smooth and figured slider sets (25, 26) can be composed of three or more pieces instead of two halves. Alternatively, a bellows form (3) covering a certain angle can be formed on the pipe (1) instead of an all-around, 360° form. In this case, rather than using slider sets (25, 26), a single movable smooth slider and a single movable corrugated slider can be used at the region where the figure will be formed.

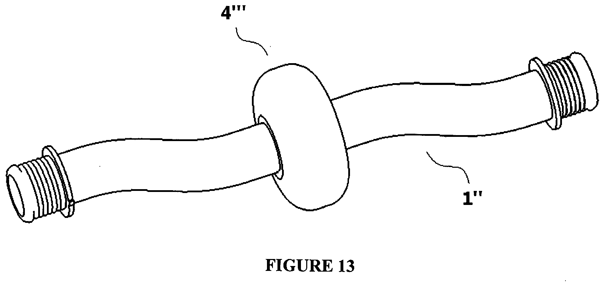

The disclosed method used for producing bellows pipes can also be used for producing a variable diameter pipe with a substantially uniform wall thickness distribution. As is known, the thinnest wall thickness that can be obtained by the pressurized fluid injection technologies proportionately changes with the outer diameter of the pipe. For this reason, a pipe produced with the pressurized fluid injection technologies must have different wall thicknesses at different diameter sections. Thus, s pipe (1") depicted in Figure 13, which has a larger diameter section (4") for sound absorbing purposes for example, can be produced by joining three separately produced sections by welding. Due to a great number of operations and extra labor required by this method, production costs and quality risks increase. However, by means of the production method of the present invention, a resonator pipe of this type can be produced in a single process.

Besides variations in diameters, it is frequently encountered, especially in automotive fluid lines, that the pipe cross-section is not circular at certain regions. In the above-mentioned conventional pressurized fluid injection technologies, the hollow section emptied by the pressurized fluid cannot follow the changing outer cross-section of the pipe due to the nature of the process. For this reason, for example although the pipe starting with a circular cross-section becomes elliptic at its middle portion, the inner volume emptied by the fluid maintains its circular structure. As a result of this, wall thickness of the pipe gets dangerously narrow along the long side of the elliptic cross-section, while being improperly thicker along the short side. By means of the production method of the present invention, pipes of this type having a cross-section varying regionally can also be produced in a single process with relatively uniform wall thickness distribution.

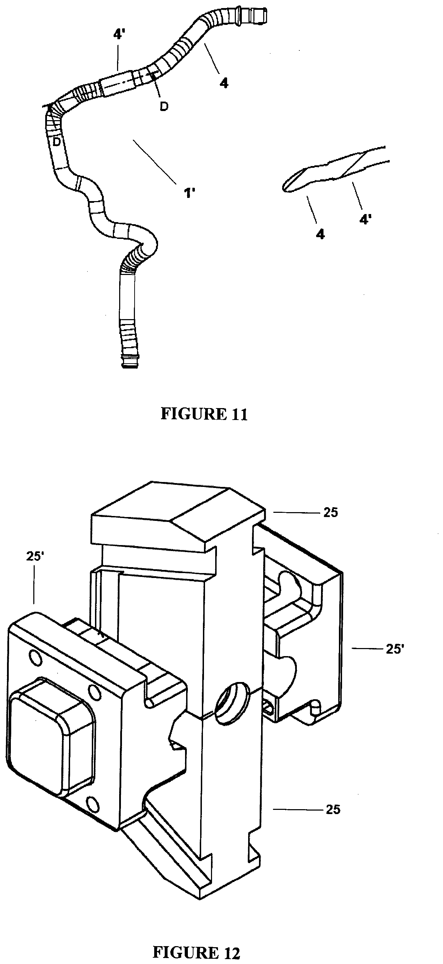

Figure 11 shows a pipe (1') comprising a smooth portion (4') with a larger diameter with respect to the rest of the pipe (1'), produced with fluid injection methods and having a uniform wall thicknesses distribution. In the first stage of the production method of this pipe (1'), the smooth slider set (25) that is active in the mold (20) defines a constant diameter cavity (23). The core of the molten plastic filling the cavity (23) is pushed out by the pressurized fluid supplied into the melt. In this manner, a preform (2) with a given wall thickness is obtained. Then, another smooth slider set (25') which is orthogonal to the former one (25) is attached to the mold in such a manner that a space (6) remains between the slider set (25') and the preform (2). Said sliders (25, 25') are shown in Figure 12.

In the second stage of the method, the preform (2) is blown towards the walls of the slider (25') by means of the pressurize fluid, but this time, a smooth but larger diameter section (4') is formed on the pipe (1') instead of a bellows portion (3).

Even if the final wall thickness of the large diameter smooth portion (4') is thinner with respect to the rest of the pipe (1'), this difference is much smaller than the wall thickness difference than can be obtained with the state of the art methods. In this manner, production of a pipe with changing cross-section but uniform wall thickness is made possible by means of fluid injection techniques. Similarly, in order to diversify pipe forms that can be obtained by means of the method of the present invention, sliders in different forms other than corrugated or smooth can be used. Moreover, the number of the slider sets, the number of the sliders in the sets, the positions and angles of the sliders with respect to each other and to the mold, and the shapes and the inner wall forms of the sliders can also be altered according to the characteristics of the pipe to be produced and the production resources.

Alternatively, the production method of the present invention can also be used for producing products with smaller or larger wall thicknesses at the region where the cross-section is different.

The method of the present invention can be used for shaping polypropylene (PP), polyethylene (PE) or similar polyolefins or engineering plastics such as polybutylene terephthalate (PBT), thermoplastic elastomer (TPE), polyphenylene sulfide (PPS) or nylon. Moreover, said method is also suitable for shaping pipes produced from multi-layered or successively-different materials.

The disclosed method of production enables the attachments like clips, clamps, brackets etc that are conventionally manufactured in a separate step and then joined with the pipe by a welding operation, to be produced together with the product in a single operation.

## Claims

1. A manufacturing method for manufacturing a hollow plastic article (1), having partially or completely a bellows form, **characterized in that** the said method comprises the steps of
a) injecting a molten plastic material into a mold cavity (23) with no bellows form,
b) pushing the core of the molten material out by injecting a pressurized fluid or a projectile into the material and thus obtaining a hollow preform (2) with no bellows,
c) activating the sliders (26) on the mold (20), that will provide the bellows form, by means of a movable slider system positioned in the mold (20) at a region where the bellows portion (3) will be formed, such that said movable slider system is either composed of two slider sets (25, 26) arranged orthogonal to each other wherein one (25) of the said two slider sets (25, 26) has a smooth inner wall, while the other one (26) has a bellows form that that is desired to be formed on the final product (1) with troughs (31') and ridges (32'), or movable segments (28) on a stationary slider set (27),
d) inflating the not-entirely-solidified material towards the walls of the mold by supplying high-pressure gas and/or liquid into the preform (2) and thus forming the bellows shape (3),
e) discharging the fluid after the plastic material completely solidifies, and then removing the final article (1) with bellows form from the mold (20).

2. A manufacturing method as in Claim 1, wherein the mold cavity (23) in step (a) is formed in a mold (20) having two halves being the male (21) and the female (22), and at one end of which there is a nozzle (8) through which the molten plastic is supplied and at the other end there is an injector (7) through which the pressurized fluid or the projectile is injected.

3. A manufacturing method as in Claim 1, wherein at one end of the said mold cavity (23) in the step (a), an extra mold cavity (24) is provided, into which the molten material displaced in step (b) fills.

4. A manufacturing method as in Claim 3, wherein said extra mold cavity (24) is connected to the said mold cavity (23) by means of a valve (9) that is closed during step (a) and opened during step (b).

5. A manufacturing method as in Claim 1 , wherein said mold cavity (23) in step (a) comprises additional portions (10) that will form the required connecting elements (5) on the plastic article (1).

6. A manufacturing method as in any one of the above claims, wherein said pressurized fluid in step (b) is water.

7. A manufacturing method as in any one of the above claims, wherein said pressurized fluid in step (b) is gas.

8. A manufacturing method as in Claim 1, wherein one (25) of the said two slider sets (25, 26) has a smooth inner wall, while the other one (26) has a bellows form that is desired to be formed on the final product (1) with troughs (31') and ridges (32').

9. A manufacturing method as in Claim 8, wherein steps (a) and (b), said smooth slider set (25) is in closed state to form the mold cavity, whereas the corrugated slider set (26) is in detached position; in step (c) the smooth slider set (25) is detached by moving in opposite directions (R1, R2) and the corrugated slider set (26) is closed by moving towards each other (R3, R4) to form the mold cvity; and in steps (d) and (e) take place while the corrugated slider set (26) is closed, and the smooth slider set (25) is in detached position.

10. A manufacturing method as in Claim 9 , wherein there is a certain space (6) between the inner diameter of said corrugated slider set (26) in closed position and the outer diameter of the preform (2).

11. A manufacturing method as in Claim 10, wherein the outer diameter (d2) of the bellows portion (3) is larger than the outer diameter (d1) of the smooth tubular portion (4) and the wall thickness (t2) of the former is smaller than the wall thickness (t1) of the latter.

12. A manufacturing method as in any one of the above claims, wherein said method comprises an additional step of equalizing the pressure inside the preform (2) to the atmospheric pressure between the steps (b) and (c).

13. A manufacturing method as in any one of the above claims, wherein one or both of the slider sets (25, 26) are heated or cooled in order to give a better bellows form (3).

14. A manufacturing method as in any one of the above claims, wherein said plastic article (1) is a pipe.

15. A manufacturing method used for manufacturing a hollow plastic article (1') with a changing cross-section and substantially uniform wall thickness, **characterized in that** the said manufacturing method comprises the steps of
a) injecting a molten plastic material into a mold cavity (23) with a constant diameter,
b) displacing the core of the molten material by injecting a pressurized fluid or a projectile into the material and thus obtaining a hollow preform (2) with a uniform wall thickness,
c) activating sliders (25, 25') on the mold (20), that will provide the alternative cross-section (4'), by means of a movable slider system positioned in the mold (20) at the region where the portion with that alternative cross-section (4') will be formed, the movable slider system being composed of two smooth slider sets (25, 25') arranged orthogonal to each other, wherein the smooth slider set (25) defines the constant diameter cavity (23) and wherein the another smooth slider set (25') is attached to the mold in such a manner that a space (6) remains between the another slider set (25') and the preform (2),
d) inflating the not-entirely-solidified material of the preform (2) towards the walls of the mold (20) and towards the walls of the another smooth slider set (25') by supplying high-pressure gas and/or liquid into the perform (2) and thus forming the portion with a different cross- section (4'),
e) discharging the fluid after the plastic material completely solidifies and then removing the final article (V) with changing cross-section but uniform wall thickness from the mold (20).

16. A manufacturing method as in previous claim, wherein the said plastic article (1') is a pipe.

17. A manufacturing method as in Claim 15, wherein said plastic article (1") is a pipe having a larger diameter section (4") for sound absorption purposes.

18. An apparatus comprising a mold (20) that is used for manufacturing a hollow plastic article (1) having partially or completely a bellows form, that has two halves as the male (21) and the female (22) and that comprises a smooth mold cavity (23), at one end of which there is a nozzle (8) through which the molten plastic is injected and at the other end there is an injector (7) through which the pressurized liquid or the projectile is injected and **characterised by** that the mold (20) also comprises a movable slider system that will provide the bellows form, wherein the movable slider system is either composed of two slider sets (25, 26) arranged orthogonal to each other wherein one (25) of the said two slider sets (25, 26) has a smooth inner wall, while the other one (26) has a bellows form that is desired to be formed on the final product (1) with troughs (31') and ridges (32'), or movable segments (28) on a stationary slider set (27).

19. An apparatus as in previous claim, wherein at one end of the said mold cavity (23) an extra mold cavity (24) is provided, into which the molten material displaced in step (b) fills.

20. An apparatus as in the previous claim, wherein said extra mold cavity (24) is connected to the said mold cavity (23) by means of a valve (9).

21. An apparatus as in Claim 18, wherein the said mold cavity (23) comprises additional portions(10) that will form the required connecting elements (5) on the plastic article(1).

22. An apparatus as in Claim 18, wherein one (25) of the said two slider sets (25, 26) has smooth inner wall while the other (26) one has a bellows form that is desired to be formed on the final product (1) with troughs (31') and ridges (32').

23. An apparatus as in previous claim, wherein between the inner diameter of said corrugated slider set (26) and said smooth slider set (25), there is a space (6) determining the wall thickness difference between the bellows form (3) and the smooth tubular form (4) of the final product (1).

24. An apparatus as in any one of Claims 22 and 23, wherein one or both of said slider sets (25, 26) are heated or cooled in order to give a better bellows form (3).

## Patentansprüche

1. Herstellungsverfahren für die Herstellung von hohlem Kunststoffartikel (1) welcher teilweise oder vollständig balgförmig ist, **dadurch gekennzeichnet, dass** das Verfahren die folgende Schritte umfasst:
a) einspritzen eines flüssigen Kunststoffmaterials in eine Formkavität (23) die nicht balgförmig ist;
b) herausdrücken des Kernes des flüssigen Materials durch einspritzen einer Druckflüssigkeit oder eines Projektils in das Material und dadurch Gewinnung eines Vorformlings (2) die nicht balgförmig ist;
c) aktivieren der Schieber (26) auf der Form (20), die die Balgform bereitstellen werden mittels eines verschiebbaren Schiebersystems welches in der Form (20) in einem Bereich aufgestellt ist wo das balgförmige Teil (3) ausgebildet wird, sodass das verschiebbare Schiebersystem entweder aus verschiebbaren Abschnitten (28) auf einer ortsfesten Schiebergruppe (27) oder aus den beiden Schiebergruppen (25, 26) zusammengesetzt ist, die an einander rechtwinklig angeordnet sind, wobei die Eine (25) von diesen beiden Schiebergruppen (25, 26) eine glatte Innenwand aufweist während die Andere (26) eine Balgform aufweist, welche wunschgemäß an dem Endprodukt (1) mit Vertiefungen (31') und Erhöhungen (32') ausgebildet wird;
d) aufblasen des nicht ganz erstarrten Materials gegen die Wände der Form durch Einblasen in die Vorformling (2) von Hochdruckgas und/oder -flüssigkeit und somit Ausbildung der Balg Gestalt (3);
e) abführen der Flüssigkeit nachdem das Kunststoffmaterial völlig erstarrt ist und dann entnehmen des balgförmigen Endproduktes (1) aus der Form (20).

2. Herstellungsverfahren nach Anspruch 1, wobei die Formkavität (23) im Schritt (a) in einer Form (20) mit zwei hälften, nämlich mit der positiven Hälfte (21) und mit der negativen Hälfte (22) ausgebildet ist, und wovon an einem Ende sich eine Düse (8) befindet wodurch der flüssige Kunststoff eingeführt wird und an dem anderen Ende sich ein Einspritzer (7) befindet, wodurch die Druckflüssigkeit oder das Projektil eingespritzt wird.

3. Herstellungsverfahren nach Anspruch 1, wobei im Schritt (a) an einem Ende von der Formkavität (23) eine zusätzliche Formkavität (24) bereitgestellt ist, in die das im Schritt (b) verdrängte flüssige Material gefüllt wird.

4. Herstellungsverfahren nach Anspruch 3, wobei die zusätzliche Formkavität (24) an die Formkavität (23) über ein Ventil (9) angeschlossen ist, das während Schritt (a) geschlossen und während Schritt (b) offen ist.

5. Herstellungsverfahren nach Anspruch 1, wobei die Formkavität (23) im Schritt (a) Zusatzteile (10) aufweist die die notwendigen Anschlusselemente (5) auf dem Kunststoffartikel (1) ausbilden werden.

6. Herstellungsverfahren nach irgendeinem der vorangehenden Ansprüche, wobei die Druckflüssigkeit im Schritt (b) Wasser ist.

7. Herstellungsverfahren nach irgendeinem der vorangehenden Ansprüche, wobei die Druckflüssigkeit im Schritt (b) Gas ist.

8. Herstellungsverfahren nach Anspruch 1, wobei die Eine (25) von den zwei Schiebergruppen eine glatte innenwand aufweist, während die Andere (26) die Balgform aufweist, welche wunschgemäß an dem Endprodukt (1) mit Vertiefungen (31') und Erhöhungen (32') ausgebildet wird.

9. Herstellungsverfahren nach Anspruch 8, wobei
in den Schritten (a) und (b), die glatte Schiebergruppe (25) für die Ausbildung der Formkavität im geschlossenen Zustand ist während die wellige Schiebergruppe (26) im abgetrennten Stellung ist;
im Schritt (c) die glatte Schiebergruppe (25) durch Verschiebung in entgegengesetzten Richtungen (R1, R2) abgetrennt wird und die wellige Schiebergruppe (26) für die Ausbildung der Formkavität durch Verschiebung zu einander (R3, R4) geschlossen wird; und
in den Schritten (d) und (e) die wellige Schiebergruppe (26) geschlossen ist und die glatte Schiebergruppe (25) im abgetrennten Stellung ist.

10. Herstellungsverfahren nach Anspruch 9, wobei es zwischen dem Innendurchmesser der welligen Schiebergruppe (26) im geschlossenen Stellung und dem Außendurchmesser des Vorformlings (2) ein bestimmter Abstand (6) gibt.

11. Herstellungsverfahren nach Anspruch 10, wobei der Außendurchmesser (d2) des balgförmigen Teils (3) grösser ist als der Außendurchmesser (d1) des glatten Schlauchteils (4) und die Wanddicke (t2) des Erstgenannten dünner ist als Wanddicke (t1) des Letztgenannten.

12. Herstellungsverfahren nach irgendeinem der vorangehenden Ansprüche, wobei zwischen den Schritten (b) und (c), das Verfahren ein Zusatzschritt umfasst für den Ausgleich des Druckes innerhalb des Vorformlings (2) auf den atmosphärischen Druck.

13. Herstellungsverfahren nach irgendeinem der vorangehenden Ansprüche, wobei eine oder beide der Schiebergruppen (25, 26) beheizt oder gekühlt werden um eine bessere Balgform (3) zu geben.

14. Herstellungsverfahren nach irgendeinem der vorangehenden Ansprüche, wobei der Kunststoffartikel (1) ein Rohr ist.

15. Herstellungsverfahren eingesetzt für die Herstellung von hohlem Kunststoffartikel (1') mit wechselndem Querschnitt und im wesentlichen gleichmäßiger Wanddicke, **dadurch gekennzeichnet dass** das Herstellungsverfahren die folgende Schritte umfasst:
a) einspritzen eines flüssigen Kunststoffmaterials in eine Formkavität (23) mit einer konstanten Durchmesser;
b) verdrängen des Kernes des flüssigen Materials durch einspritzen einer Druckflüssigkeit oder eines Projektils in das Material und dadurch Gewinnung eines hohlen Vorformlings (2) mit gleichmäßiger Wanddicke;
c) aktivieren der Schieber (25, 25') auf der Form (20), die den alternativen Querschnitt (4') bereitstellen werden, mittels eines verschiebbaren Schiebersystems welches in der Form (20) in einem Bereich aufgestellt ist wo das Teil mit dem alternativen Querschnitt (4') ausgebildet wird, wobei das verschiebbare Schiebersystem aus zwei glatten Schiebergruppen (25, 25') zusammengesetzt ist die an einander rechtwinklig angeordnet sind, wobei die glatte Schiebergruppe (25) die Kavität (23) mit dem konstanten Durchmesser definiert und wobei die andere glatte Schiebergruppe (25') derart an die Form verbunden ist, dass zwischen der anderen glatten Schiebergruppe (25') und dem Vorformling (2) ein Abstand verbleibt;
d) aufblasen des nicht ganz erstarrten Materials des Vorformlings (2) gegen die Wände der Form (20) und gegen die Wände der anderen glatten Schiebergruppe (25') durch Einblasen in die Vorformling (2) von Hochdruckgas und/oder -flüssigkeit und somit Ausbildung des Teils mit einem unterschiedlichen Querschnitt (4);
e) abführen der Flüssigkeit nachdem das Kunststoffmaterial völlig erstarrt ist und dann entnehmen des Endartikels (V) mit wechselndem Querschnitt aber gleichmäßiger Wanddicke aus der Form (20).

16. Herstellungsverfahren nach dem vorangehenden Anspruch, wobei der Kunststoffartikel (1') ein Rohr ist.

17. Herstellungsverfahren nach Anspruch 15, wobei der Kunststoffartikel (1") ein Rohr ist das zur Schallschluckungszwecken einen Abschnitt (4") mit größerem Durchmesser aufweist.

18. Vorrichtung aufweisend eine Form (20), die für die Herstellung von hohlem Kunststoffartikel (1) eingesetzt ist welcher teilweise oder vollständig balgförmig ist, die zwei Hälften aufweist, nämlich die positive Hälfte (21) und die negative Hälfte (22), und die eine glatte Formkavität (23) aufweist, wovon an einem Ende sich eine Düse (8) befindet, wodurch der flüssige Kunststoff eingespritzt wird und an dem anderen Ende sich ein Einspritzer (7) befindet, wodurch die Druckflüssigkeit oder das Projektil eingespritzt wird und **dadurch gekennzeichnet, dass** die Form (20) weiterhin ein verschiebbares Schiebersystem aufweist das die Balgform bereitstellen wird, wobei das verschiebbare Schiebersystem entweder aus verschiebbaren Abschnitten (28) auf einer ortsfesten Schiebergruppe (27) oder aus zwei Schiebergruppen (25, 26) zusammengesetzt ist, die an einander rechtwinklig angeordnet sind, wobei die Eine (25) von diesen zwei Schiebergruppen (25, 26) eine glatte Innenwand aufweist während die Andere (26) eine Balgform aufweist, welche wunschgemäß an dem Endprodukt (1) mit Vertiefungen (31') und Erhöhungen (32') ausgebildet wird.

19. Vorrichtung nach dem vorangehenden Anspruch, wobei an einem Ende von der Formkavität (23) eine zusätzliche Formkavität (24) bereitgestellt ist, in die das im Schritt (b) verdrängte flüssige Material gefüllt wird.

20. Vorrichtung nach dem vorangehenden Anspruch, wobei die zusätzliche Formkavität (24) über ein Ventil (9) an die Formkavität (23) angeschlossen ist.

21. Vorrichtung nach Anspruch 18, wobei die Formkavität (23) Zusatzteile (10) aufweist die die notwendigen Anschlusselemente (5) auf dem Kunststoffartikel (1) ausbilden werden.

22. Vorrichtung nach Anspruch 18, wobei die Eine (25) von zwei Schiebergruppen (25, 26) eine glatte innenwand aufweist, während die Andere (26) eine Balgform aufweist, welche wunschgemäß an dem Endprodukt (1) mit Vertiefungen (31') und Erhöhungen (32') ausgebildet wird.

23. Vorrichtung nach dem vorangehenden Anspruch, wobei es zwischen dem Innendurchmesser der welligen Schiebergruppe (26) und der glatten Schiebergruppe (25) ein Abstand (6) gibt, welcher den Unterschied der Wanddicke zwischen der Balgform (3) und der glatten Schlauchform (4) des Endprodukts (1) bestimmt.

24. Vorrichtung nach irgendeinem der Ansprüche 22 und 23, wobei eine oder beide der Schiebergruppen (25, 26) beheizt oder gekühlt werden um eine bessere Balgform (3) zu geben.

## Revendications

1. Procédé de production pour la production des articles creux en plastique (1) étant partiellement ou entièrement en forme de soufflet, **caractérisé en ce que** le procédé comprend les étapes suivants :
a) injecter une matière plastique fondu dans une cavité de moulage (23) n'ayant pas une forme de soufflet ;
b) pousser dehors le noyau de la matière fondu, en injectant dans la matière un fluide hydraulique ou un projectile, et obtenir ainsi une préforme (2) n'ayant pas une forme de soufflet ;
c) sur le moule (20) qui donnera la forme de soufflet, activer le coulisseau (26) à l'aide d'un système coulissant mobil situé dans le moule (20) dans une région où la portion ayant la forme de soufflet (3) sera formée, de sorte que le système coulissant mobil est composé, soit des sections (28) mobiles sur un ensemble de coulisseaux (27) stationnaires, soit de deux ensembles de coulisseaux (25, 26) disposés en équerre ; l'un (25) des deux ensembles de coulisseaux (25, 26) présentant une paroi intérieure lisse tandis que l'autre (26) ayant la forme de soufflet souhaitée à former sur le produit final (1) avec dépressions (31') et crêtes (32');
d) gonfler la matière qui n'est pas encore entièrement solidifiée, vers les parois du moule en alimentant du gaz et/ou du fluide à haute pression dans la préforme (2) et créer ainsi la forme de soufflet (3) ;
e) évacuer le fluide, après que la matière plastique soit entièrement solidifiée, et ensuite retirer du moule (20) le produit final (1) ayant la forme de soufflet.

2. Procédé de production selon revendication 1, dans lequel dans l'étape (a) la cavité de moulage (23) est formée dans un moule (20) à deux moitiés, soit un mâle (21) et une femelle (22) et comporte à une extrémité une buse (8) par laquelle la matière plastique fondue est fourni et à l'autre extrémité un injecteur (7), par laquelle le fluide hydraulique ou le projectile est injecté.

3. Procédé de production selon revendication 1, dans lequel une extrémité de la cavité de moulage (23) comporte dans l'étape (a), une cavité de moulage supplémentaire (24), dans laquelle la matière fondue déplacée dans l'étape (b) est remplie.

4. Procédé de production selon revendication 3, dans lequel la cavité de moulage supplémentaire (24) est raccordée à la cavité de moulage (23) par une valve (9), qui est fermée pendant l'étape (a) et ouverte pendant l'étape (b).

5. Procédé de production selon revendication 1, dans lequel la cavité de moulage (23) de l'étape (a) comporte des portions complémentaires (10) qui forment les éléments de connexion (5) nécessaires sur l'article en plastique (1).

6. Procédé de production selon l'une quelconque des revendications précédentes, dans lequel le fluide hydraulique dans l'étape (b) est de l'eau.

7. Procédé de production selon l'une quelconque des revendications précédentes, dans lequel le fluide hydraulique dans l'étape (b) est un gaz.

8. Procédé de production selon la revendication 1, dans lequel l'un (25) des deux ensembles de coulisseaux (25, 26) a une paroi intérieure lisse, pendant que l'autre (26) a la forme d'un soufflet avec dépressions (31') et crêtes (32') qui est désirée d'être formée sur produit final (1).

9. Procédé de production selon la revendication 8, dans lequel
dans les étapes (a) et (b), l'ensemble de coulisseaux (25) lisses est en position fermé pour former la cavité de moulage tandis que l'ensemble de coulisseaux (26) ondulés est en position détaché ;
dans l'étape (c) l'ensemble de coulisseaux (25) lisses est détaché par mouvement en directions opposés (R1, R2) et pour former la cavité de moulage l'ensemble de coulisseaux (26) ondulés est fermé par mouvement l'un vers l'autre (R3, R4) ; et
dans les étapes (d) et (e) l'ensemble de coulisseaux (26) ondulés est fermé et l'ensemble de coulisseaux (25) lisses est en position détachée.

10. Procédé de production selon la revendication 9, dans lequel il y a un certain espace (6) entre le diamètre intérieur de l'ensemble de coulisseaux lisses (26) en état fermé et le diamètre extérieur de la préforme (2).

11. Procédé de production selon la revendication 10, dans lequel le diamètre extérieur (d2) de la portion ayant la forme de soufflet (3) est plus large que le diamètre extérieur (d1) la portion lisse tubulaire (4) et l'épaisseur de la paroi (t2) de la première est plus fine que l'épaisseur de la paroi (t1) du dernier.

12. Procédé de production selon l'une quelconque des revendications précédentes, dans lequel le procède comprend une étape supplémentaire entre les étapes (b) et (c) pour égaliser la pression dans la préforme (2) à la pression atmosphérique.

13. Procédé de production selon l'une quelconque des revendications précédentes, dans lequel l'une ou les deux des ensembles de coulisseaux (25, 26) sont chauffés ou refroidis pour donner une forme de soufflet (3) meilleure.

14. Procédé de production selon l'une quelconque des revendications précédentes, dans lequel l'article en plastique (1) est un tuyau.

15. Procédé de production utilisé pour produire des articles creux en plastique (1') ayant une section transversale changeante et une épaisseur de paroi essentiellement uniforme, **caractérisé en ce que** le procédé de production comprend les étapes suivants :
a) injecter une matière plastique fondu dans une cavité de moulage (23) ayant un diamètre constante ;
b) déplacer le noyau de la matière fondu, en injectant dans la matière un fluide hydraulique ou un projectile, et obtenir ainsi une préforme (2) creux ayant une épaisseur de paroi uniforme ;
c) sur le moule (20) activer les coulisseaux (25, 25') qui formeront la cross section alternative (4'), à l'aide d'un système coulissant mobil situé dans le moule (20) dans une région où le portion au diamètre alternative (4') sera formé, dans lequel le système coulissant mobil est composé de deux ensembles de coulisseaux (25, 25') disposés en équerre, dans lequel l'ensemble des coulisseaux lisses (25) définissent la cavité (23) à diamètre constante et dans lequel l'autre ensemble des coulisseaux lisses (25) est attaché à la moule de tel sorte qu'il reste une espace entre le préforme (2) et l'autre ensemble des coulisseaux (25') ;
d) gonfler la matière du préforme (2) qui n'est pas encore entièrement solidifiée, vers les parois du moule (20) et vers les parois d'un autre ensemble coulisseau lisse (25') en alimentant du gaz et/ou du fluide à haute pression dans la préforme (2) et créer ainsi une portion avec une section transversale (4') différente ;
e) évacuer le fluide, après que la matière plastique soit entièrement solidifiée, et ensuite retirer du moule (20) le produit final (V) ayant une section transversale changeant mais une épaisseur de paroi uniforme.

16. Procédé de production selon la revendication précédente, dans lequel l'article en plastique (1') est un tuyau.

17. Procédé de production selon la revendication 15, dans lequel l'article en plastique (1") est un tuyau qui comporte une activer les coulisseaux (25, 25') à diamètre supérieure pour absorption acoustique.

18. Dispositif comportant un moule (20), die utilisé pour la production des articles creux en plastique (1) étant partiellement ou entièrement en forme de soufflet, ayant deux moitiés, soit un mâle (21) et une femelle (22), et une cavité de moulage lisse (23) comportant à une extrémité une buse (8) par laquelle la matière plastique fondue est fourni et à l'autre extrémité un injecteur (7), par laquelle le fluide hydraulique ou le projectile est injecté et **caractérisé en ce que** le moule (20) comporte également un système coulissant mobile qui donnera la forme de soufflet, de sorte que le système coulissant mobil est composé, soit des sections (28) mobiles sur un ensemble de coulisseaux (27) stationnaires, soit de deux ensembles de coulisseaux (25, 26) disposés en équerre ; dans lequel l'un (25) des deux ensembles de coulisseaux (25, 26) présente une paroi intérieure lisse tandis que l'autre (26) a la forme de soufflet souhaitée à former sur le produit final (1) avec dépressions (31') et crêtes (32');

19. Dispositif selon la revendication précédente, dans lequel une extrémité de la cavité de moulage (23) comporte une cavité de moulage supplémentaire (24), dans laquelle la matière fondue déplacée dans l'étape (b) est remplie.

20. Dispositif selon la revendication précédente, dans lequel la cavité de moulage (24) supplémentaire est reliée à la cavité de moulage (23) par une valve (9).

21. Dispositif selon la revendication 18, dans lequel la cavité de moulage (23) présente des pièces supplémentaires (10) qui formeront les éléments de connexion (5) nécessaires sur l'article en plastique (1).

22. Dispositif selon la revendication 18, dans lequel l'une (25) des deux ensembles de coulisseaux (25, 26) a une paroi intérieure lisse, pendant que l'autre (26) a une forme de soufflet, avec dépressions (31') et crêtes (32') qui est désirée d'être formée sur produit final (1).

23. Dispositif selon la revendication précédente, dans lequel entre le diamètre intérieur de l'ensemble de coulisseaux lisses (26) et l'ensemble de coulisseaux lisses (25) il y a une espace (6) qui détermine la différence de l'épaisseur de paroi entre la forme de soufflet (3) et la forme lisse de tuyau (4) des produits finaux (1).

24. Dispositif selon l'une quelconque des revendications 22 et 23, dans lequel l'une ou les deux des ensembles de coulisseaux (25, 26) sont chauffés ou refroidis pour donner une forme de soufflet (3) meilleure.
